# EUROPÄISCHE PATENTANMELDUNG

(11) **EP 1 191 669 A2**
(43) Veröffentlichungstag der Anmeldung: **27.03.2002**
(21) Anmeldenummer: 01440272.1
(22) Anmeldetag: 20.08.2001
(51) Int. Cl.: H02K 7/116, H02K 11/00

(54) **Elektrischer Antrieb**

(30) Priorität: 22.09.2000 DE 10047062
(71) Anmelder: ALCATEL, 75008 Paris (FR)
(72) Erfinder: Pfendler, Klaus, 79848 Bonndorf (DE); Tascher, Gerhard, 79848 Bonndorf (DE); Hartmann, Christof, 79771 Klettgau-Geisslingen (DE); Neukum, Heinz, 79780 Stühlingen 11 (DE)
(74) Vertreter: Rausch, Gabriele, Dr.

(57) **Zusammenfassung**

Die Erfindung betrifft einen elektrischen Antrieb, insbesondere Jalousieantrieb, mit einem Motor, einem Getriebe und Mitteln zur Endlagenbegrenzung. Um Bremsgeräusche zu reduzieren und eine Konstruktionsvereinfachung zu erreichen, ist vorgesehen, dass das Getriebe als selbsthemmendes Getriebe und die Mittel zur Endlagenbegrenzung als elektrische Wegmesseinrichtung mit Ansteuereinrichtung ausgebildet sind.

## Beschreibung

Die Erfindung betrifft einen elektrischen Antrieb, insbesondere Jalousieantrieb, mit einem Motor, einem Getriebe und Mitteln zur Endlagenbegrenzung.

Derartige Antriebe werden für eine ganze Reihe von Anwendungen benötigt. Neben der Betätigung von Jalousien, inklusive der Verstellung einzelner Jalousielamellen, kommen sie beispielsweise auch zur Positionssteuerung bei Werkzeugmaschinen zum Einsatz. Die nachfolgende Beschreibung bezieht sich auf Jalousieantriebe, ohne dass damit eine Beschränkung verbunden sein soll.

Bekannte Jalousieantriebe besitzen ein zwei- beziehungsweise dreistufiges Planetengetriebe sowie ein mitlaufendes Abschaltgetriebe mit Mikroschaltern um die obere(n) und untere(n) Endpositionen festzulegen. Das Planetengetriebe zeichnet sich zwar durch einen guten Wirkungsgrad aus, erfordert aber gleichzeitig eine Bremseinrichtung, damit im stromlosen Zustand die Jalousie in ihrer eingestellten Position beharrt. Die Bremseinrichtung verursacht ein unschönes Ein- /Ausschaltgeräusch, das insbesondere bei zusätzlicher Nachregelung der Jalousielamellen als störend empfunden wird. Nachteilig bei dem mitlaufenden Abschaltgetriebe ist vor allem, dass zu dessen Einstellung mechanische Einstellarbeiten direkt am Antrieb erforderlich sind.

Der Erfindung liegt die Aufgabe zugrunde, einen elektrischen Antrieb der oben genannten Gattung hinsichtlich des Bremsgeräusches und des konstruktiven Aufwandes zu verbessern.

Die Aufgabe wird erfindungsgemäß mit den kennzeichnenden Merkmalen des Anspruchs 1 gelöst. Durch die Verwendung eines selbsthemmenden Getriebes, welches von der Getriebeabtriebsseite nicht zurückgedreht werden kann, entfällt die Notwendigkeit, eine Bremseinrichtung vorzusehen. Die typischen Knackgeräusche beim Wirksamwerden einer Bremseinrichtung treten nicht mehr auf. Insgesamt ergibt sich eine starke Reduzierung des Geräuschpegels. Die elektronische Wegmesseinrichtung mit Ansteuereinrichtung ermöglicht eine sehr komfortable und exakte Jalousie- und/oder Lamellen-Einstellung. Wenn die Ansteuereinrichtung einen Lichtintensitätssensor aufweist, ist auf einfache Weise die Nachführung der Jalousie- beziehungsweise Lamelleneinstellung automatisch in Abhängigkeit von der Sonneneinstrahlung möglich. Auch ein häufiges Nachstellen der Position wird aufgrund der verringerten Geräuschentwicklung erhöhte Akzeptanz finden.

Gemäß Anspruch 2 ist der Motor als DC-Motor ausgebildet. Bei den bisher üblichen Jalousieantrieben wird als Motor ein sogenannter Einphasen-Kondensatormotor verwendet. Die Leerlaufdrehzahl dieses Motors beträgt, bedingt durch die Netzfrequenz, circa 2900 rpm. Beim Nennmoment sinkt die Drehzahl auf circa 2600 rpm. Eine Regelung der Drehzahl ist entweder sehr aufwendig, da dazu ein Frequenz-Umrichter erforderlich ist, oder sehr problembehaftet, beispielsweise bei der Regelung mittels Phasenanschnittsteuerung. Bei dem DC-Motor hingegen ist die Drehzahlregelung aufgrund seiner linearer Kennlinie sehr einfach und problemlos. Beim DC-Motor ist es möglich, mittels eines reaktiven Rotors, der aus weichmagnetischem Material besteht und kein eigenes Magnetfeld erzeugt, aufgrund der resultierenden Reluktanz eine definierte Rastung zu erzielen. Diese Rastung erzeugt zusammen mit dem selbsthemmenden Getriebe eine sehr große Hemmwirkung, die auch bei großer Last für eine sichere Bremswirkung und Beharrung in der gewünschten Position ausreicht.

Gemäß Anspruch 3 ist eine Realisierung sowohl mit Bürsten, beispielsweise auf der Basis des Dunker-Motors GR53, als auch als bürstenloser DC-Motor, beispielsweise auf der Basis des Dunker-Motors BG40, möglich.

Eine eingebaute elektronische Schaltung gemäß Anspruch 4 betreibt den Motor direkt aus dem 230V-AC-Netz. Ein Transformator beziehungsweise ein Netzteil sind somit nicht erforderlich.

Vorzugsweise ist das selbsthemmende Getriebe gemäß Anspruch 5 entweder als Wolfrom-Getriebe oder als Schraubgetriebe realisiert.

Die Wegmesseinrichtung zur Endlagenbegrenzung ist gemäß Anspruch 6 mit einer im Antrieb integrierten Sensorik ausgestattet. Die Sensorik erfasst auf bekannte Art zu jedem Zeitpunkt die Position der Jalousie beziehungsweise der Lamellen, wobei im Zusammenwirken mit einer Programmiereinrichtung gemäß Anspruch 7 zum Beispiel eine zeitliche oder auch eine lichtintensitätsabhängige automatische Einstellung der Jalousie beziehungsweise der Lamellen möglich ist.

Die Erfindung beschränkt sich nicht auf die vorstehend beschriebene Ausführungsform, vielmehr ist eine Anzahl von Varianten denkbar, welche auch bei grundsätzlich anders gearteter Ausführung von den Merkmalen der Erfindung Gebrauch machen.

## Patentansprüche

1. Elektrischer Antrieb, insbesondere Jalousieantrieb, mit einem Motor, einem Getriebe und Mitteln zur Endlagenbegrenzung, **dadurch gekennzeichnet, dass** das Getriebe als selbsthemmendes Getriebe und die Mittel zur Endlagebegrenzung als elektrische Wegmesseinrichtung mit Ansteuereinrichtung ausgebildet sind.

2. Antrieb nach Anspruch 1, **dadurch gekennzeichnet, dass** der Motor als DC-Motor ausgebildet ist.

3. Antrieb nach einem der vorangehenden Ansprüche, **dadurch gekennzeichnet, dass** der Motor als Bürstenmotor oder als bürstenloser DC-Motor ausgebildet ist.

4. Antrieb nach einem der vorangehenden Ansprüche, **dadurch gekennzeichnet, dass** der Motor eine elektronische Schaltung zur 230V-AC-Netz-Anpassung aufweist.

5. Antrieb nach einem der vorangehenden Ansprüche, **dadurch gekennzeichnet, dass** das selbsthemmende Getriebe als Wolfrom-Getriebe oder als Schraubgetriebe ausgebildet ist.

6. Antrieb nach einem der vorangehenden Ansprüche, **dadurch gekennzeichnet, dass** die Wegmesseinrichtung eine im Antrieb integrierte Sensorik aufweist.

7. Antrieb nach einem der vorangehenden Ansprüche, **dadurch gekennzeichnet, dass** die Ansteuereinrichtung eine Programmiereinrichtung aufweist, welche über ein Steuerkabel mit der Wegmesseinrichtung zusammenwirkt.
